Europäisches Patentamt

European Patent Office

Office européen des brevets

(19)

(11) **EP 1 197 021 B1**

(12) **FASCICULE DE BREVET EUROPEEN**

(45) Date de publication et mention
de la délivrance du brevet:
**06.04.2005 Bulletin 2005/14**

(21) Numéro de dépôt: **00958581.1**

(22) Date de dépôt: **21.07.2000**

(51) Int Cl.⁷: **H04J 3/22**, H04L 1/00

(86) Numéro de dépôt international:
**PCT/FR2000/002105**

(87) Numéro de publication internationale:
**WO 2001/008335 (01.02.2001 Gazette 2001/05)**

(54) **PROCEDE ET DISPOSITIF DE FORMATION DE TRAMES DE TRANSPORT A PARTIR DE TRAMES DE SIGNAL CODE, ET DISPOSITIF D'EXTRACTION DES TRAMES DE SIGNAL CODE**

VERFAHREN UND EINRICHTUNG ZUR TRANSPORTRAHMENERZEUGUNG VON KODIERTEN INFORMATIONSRAHMEN UND EINRICHTUNG ZUR EXTRAKTION VON KODIERTEN INFORMATIONSRAHMEN

METHOD AND DEVICE FOR FORMING TRANSPORT FRAMES FROM CODED SIGNAL FRAMES, AND DEVICE FOR RETRIEVING CODED SIGNAL FRAMES

(84) Etats contractants désignés:
**AT BE CH CY DE DK ES FI FR GB GR IE IT LI LU MC NL PT SE**

(30) Priorité: **26.07.1999 FR 9909679**

(43) Date de publication de la demande:
**17.04.2002 Bulletin 2002/16**

(73) Titulaire: **NORTEL NETWORKS France
78117 Châteaufort (FR)**

(72) Inventeurs:
• **KRIEF, Albert, Patrick
F-91600 Savigny-sur-Orge (FR)**
• **FORCE, Pierre
F-78410 Nezel (FR)**

(74) Mandataire: **Loisel, Bertrand
Cabinet Plasseraud
65/67 rue de la Victoire
75440 Paris Cedex 09 (FR)**

(56) Documents cités:
**EP-A- 0 595 781          EP-A- 0 730 356**

**Description**

La présente invention concerne le domaine de la mise en forme des signaux numériques en vue de leur transmission, et particulièrement un procédé et un dispositif de formation de trames de transport à partir de trames de signal codé issues d'une source.

L'invention s'applique notamment, mais non exclusivement, à la transmission sur un canal radio de signaux de phonie issus d'un vocodeur.

Les méthodes de codage canal utilisées pour former les trames de transport mettent en oeuvre des techniques de détection et/ou de correction d'erreurs utilisant des codes redondants appliqués aux trames de signal codé. Souvent, les bits des trames produites par la source sont répertoriés en plusieurs classes auxquelles sont appliquées des protections plus ou moins efficaces contre les erreurs de transmission, afin de réaliser un compromis entre le besoin de détecter ou corriger les éventuelles erreurs en fonction de l'importance de l'information transmise et la bande passante que cela requiert.

Dans l'exemple des communications de phonie dans le système cellulaire de radiocommunication GSM, le vocodeur produit 260 bits par trame de signal codé de 20 ms, dont 50 bits en classe C1a, 132 bits en classe C1b et 78 bits en classe C2. Le mécanisme de formation des trames de transport à partir des trames du vocodeur est un mécanisme synchronisé, une trame de transport étant produite toutes les 20 ms pour chaque trame de phonie. Les bits des classes C1a et C1b sont protégés par un code convolutif de rendement 1/2 permettant au récepteur de corriger des erreurs de transmission. Avant ce codage, 3 bits de parité sont ajoutés aux 50 bits de la classe C1a pour permettre la détection d'erreurs résiduelles parmi ces bits, qui sont les plus sensibles. La trame de transport formée par les 378 bits produits par le codeur convolutif et par les 78 bits de la classe C2 est transmise sur le canal radio avec un entrelacement temporel avec d'autres trames de transport. L'entrelacement est prévu afin d'exploiter au mieux les capacités de correction du code convolutif compte tenu du type de canal de propagation du système GSM.

Dans le système GSM, il est encore prévu que le canal physique sur lequel sont transmises les trames de transport pour une communication donnée puisse être partagé par un canal logique de signalisation rapide associé à cette communication. Ce canal de signalisation, appelé FACCH (« Fast Associated Control Channel »), est formé par un mécanisme de vol de trame : il donne lieu à la perte d'une trame de transport correspondant à une trame de sortie du vocodeur. Il en résulte une perte de qualité au niveau du récepteur, qui n'est admissible que parce que les trames volées sont en principe rares.

Le mécanisme de vol de trame ne convient pas lorsqu'on a besoin, sur le même canal physique, d'une bande passante non négligeable par rapport à celle de la communication de phonie. Cela se produit par exemple lorsqu'on multiplexe, sur le même canal physique que le signal de parole, des informations de signalisation représentant un débit significatif. Un autre cas est celui d'une station mobile de radiocommunication cellulaire à accès multiple par répartition en fréquence (FDMA) qui, lorsqu'elle est en train de communiquer avec une station de base sur un canal de trafic, dispose d'intervalles de temps pour scruter régulièrement des canaux de balise formés par des stations de base voisines afin de permettre, le cas échéant, un transfert de communication vers la station de base procurant les meilleures conditions de propagation radio (voir par exemple demande de brevet français n° 99 06345).

Typiquement, pour ce genre d'application, il est souhaitable de disposer d'un schéma de codage canal permettant de transmettre les N trames de signal codé issues d'un vocodeur pendant une durée T dans M trames de transport disponibles pendant cette durée T, de façon à libérer une partie de la ressource de transmission pendant cette durée T pour permettre de multiplexer d'autres canaux logiques ou de réserver des fenêtres à d'autres fonctions, par exemple de scrutation.

Un but de la présente invention est de proposer un tel schéma.

Selon l'invention, il est proposé un procédé de formation de trames de transport, à transmettre sur un canal de communication, à partir de trames de signal codé, dans lequel chaque trame de signal codé comporte au moins un ensemble de bits à protéger contre des erreurs de transmission, incluant au moins un sous-ensemble de bits pour lequel on calcule un code de détection d'erreurs respectif. Chacun desdits sous-ensembles de bits est placé dans une trame de transport avec son code de détection d'erreurs respectif, et certaines au moins des trames de transport contiennent plusieurs sous-ensembles de bits, issus de trames de signal codé différentes et accompagnés par leurs codes de détection d'erreurs respectifs.

On réalise ainsi un mixage des trames de signal codé dans les trames de transport successives, permettant de régler les flux entre la source et le canal logique de communication. Il est particulièrement avantageux que le procédé garde l'affectation aux trames de signal codé de l'information de protection que représentent les codes de détection d'erreurs. Le décodeur peut donc identifier précisément les sous-ensembles de bits contenant des erreurs. Il évite ainsi d'étaler une erreur survenant ponctuellement dans une trame de transport sur les différentes trames de signal codé ayant fourni des sous-ensembles de bits à cette trame de transport.

Ledit ensemble de bits à protéger correspond à une classe de protection. Le procédé est applicable lorsqu'il y a une seule classe de protection dans les trames de signal codé, pour laquelle des codes de détection d'erreurs sont employés. Lorsqu'il y a plusieurs classes de protection, il est également applicable à chaque classe pour laquelle des codes de détection d'erreurs sont employés. Une partie au moins de ces classes peut en outre faire l'objet d'un codage correcteur d'erreurs au sein de chaque trame de transport.

Le nombre de bits desdits sous-ensembles peut varier d'une trame de signal codé à une autre. Il est alors avantageux de prévoir que le nombre de bits du code de détection d'erreurs calculé pour un sous-ensemble de bits soit une fonction croissante du nombre de bits dudit sous-ensemble, afin d'uniformiser la protection dans la classe considérée.

Dans chaque trame de transport, le nombre total de bits provenant desdits ensembles de bits à protéger est de préférence constant, de même que le nombre total de bits desdits codes de détection d'erreurs. On peut alors appliquer un même codage correcteur d'erreurs aux blocs formés dans les trames de transport par les sous-ensembles de bits provenant desdits ensembles de bits à protéger et par leurs codes de détection d'erreurs respectifs.

Un autre aspect de l'invention se rapporte à un dispositif de formation de trames de transport, à transmettre sur un canal de communication, à partir de trames de signal codé, dans lequel chaque trame de signal codé comporte au moins un ensemble de bits à protéger contre des erreurs de transmission, incluant au moins un sous-ensemble de bits. Le dispositif comprend des moyens de calcul d'un code de détection d'erreurs respectif pour chacun desdits sous-ensembles de bits, et des moyens de multiplexage pour placer chacun desdits sous-ensembles de bits dans une trame de transport avec son code de détection d'erreurs respectif. Les moyens de multiplexage sont agencés pour placer plusieurs sous-ensembles de bits, issus de trames de signal codé différentes et accompagnés par leurs codes de détection d'erreurs respectifs, dans certaines au moins des trames de transport.

Un troisième aspect de l'invention se rapporte à un dispositif d'extraction de trames de signal codé à partir de trames de transport reçues sur un canal de communication, dans lequel chaque trame de signal codé comporte au moins un ensemble de bits protégés contre des erreurs de transmission, incluant au moins un sous-ensemble de bits, le dispositif comprenant des moyens de démultiplexage pour extraire de chaque trame de transport au moins un desdits sous-ensembles de bits, accompagné par un code de détection d'erreurs respectif, caractérisé en ce que les moyens de démultiplexage sont agencés pour extraire plusieurs sous-ensembles de bits de certaines au moins des trames de transport, et pour distribuer ces sous-ensembles de bits, associés à leurs codes de détection d'erreurs respectifs, dans des trames de signal codé différentes.

D'autres particularités et avantages de la présente invention apparaîtront dans la description ci-après d'exemples de réalisation non limitatifs, en référence aux dessins annexés, dans lesquels :

-   les figures 1 et 2 sont des schémas synoptiques respectifs d'un émetteur et d'un récepteur mettant en oeuvre la présente invention ; et
-   les figures 3 et 4 sont des schémas synoptiques de modules de distribution et d'extraction de bits faisant respectivement partie de l'émetteur et du récepteur selon les figures 1 et 2.

L'invention est décrite ci-après dans son application particulière à la transmission de signaux de phonie sur un canal radio.

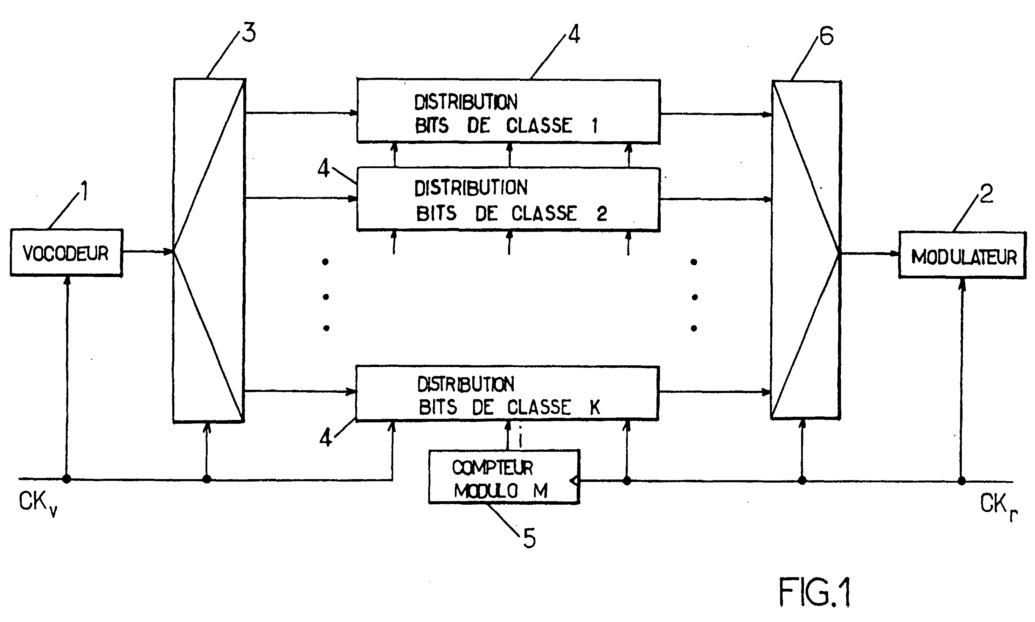

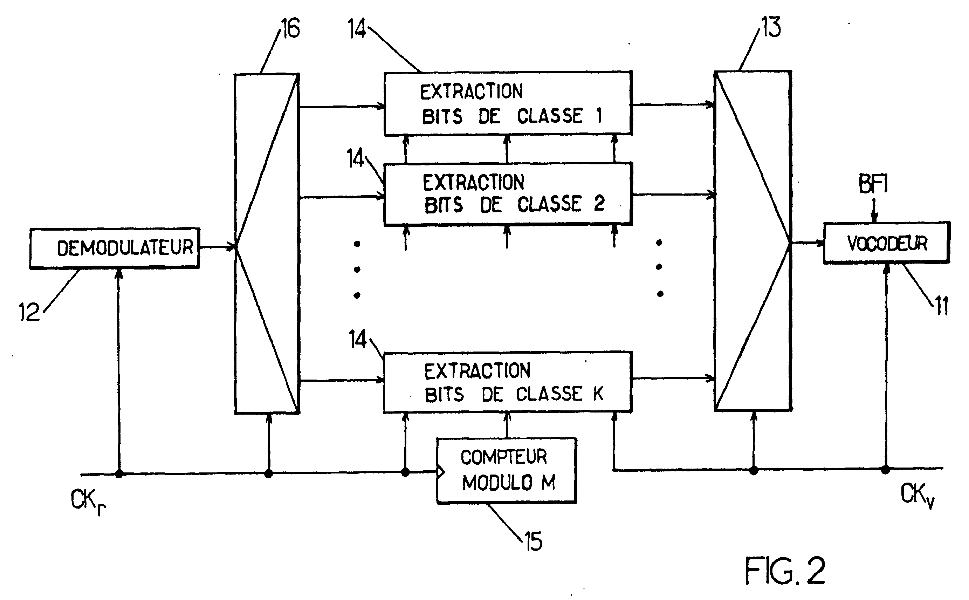

Les figures 1 et 2 montrent les vocodeurs 1, 11 de l'émetteur et du récepteur. Le vocodeur 1 de l'émetteur délivre des trames de signal de parole codé comportant chacune $n_v$ bits, qui seront traités par le vocodeur 11 du récepteur pour restituer le signal de parole. L'horloge des trames de parole est donnée par un signal périodique $CK_v$, la période d des trames étant par exemple de 20 ms.

Les figures 1 et 2 montrent également le modulateur 2 et le démodulateur 12 de l'émetteur et du récepteur. Le modulateur 2 de l'émetteur traite des trames de transport de $n_r$ bits construites à partir des trames produites par le vocodeur 1. Il forme le signal radio émis sur une interface air. Le signal radio reçu par le démodulateur 12 est traité pour restituer des trames de transport correspondantes, à partir desquelles le récepteur construit les trames de parole fournies au vocodeur 11.

Le rythme des trames de transport est donné par un signal d'horloge $CK_r$. Au niveau du récepteur, cette horloge $CK_r$ est récupérée, de façon connue en soi, par un module de synchronisation non représenté. Dans l'exemple considéré ici, la structure de l'horloge $CK_r$ est telle qu'il y ait M trames de transport sur une durée T correspondant à N périodes de trame du vocodeur (T=N.d). Les trames de transport et les trames de parole ont par exemple la même durée d, auquel cas on a M < N. Le canal radio utilisé pour la transmission des trames de transport est ainsi rendu disponible pendant une fraction (N-M)/N du temps. Cette fraction permet de réserver des fenêtres temporelles sur le canal radio, afin de multiplexer d'autres canaux logiques ou d'accomplir d'autres fonctions.

Dans l'exemple illustré par les figures 1 et 2, il est prévu un nombre K de classes de protection pour les bits issus du vocodeur 1 ($K \geq 1$). La classe 1 correspond par exemple aux bits perceptuellement les plus sensibles aux erreurs de transmission, et la classe K aux bits les moins sensibles.

Un démultiplexeur 3 reçoit le flux numérique de sortie du vocodeur 1, sépare les bits des différentes classes dans chaque trame et les fournit à des modules respectifs 4 dont le rôle est de distribuer ces bits dans les trames de transport (on notera que le démultiplexeur 3 peut être intégré implicitement au vocodeur 1). Chaque module de distribution 4 reçoit les horloges $CK_v$ et $CK_r$, ainsi qu'un index de trame i allant de 0 à M-1, délivré par un compteur modulo M 5 cadencé par l'horloge $CK_r$.

Les modules de distribution 4 délivrent les bits à insérer dans chaque trame de transport i d'une plage de durée T, qui sont assemblés par un multiplexeur 6 pour former ces trames de transport fournies au modulateur 2 au rythme $CK_r$.

Symétriquement, des trames de transport délivrées par le démodulateur 12 du récepteur sont adressées à un démultiplexeur 16 qui sépare les bits relevant des différentes classes de protection, et les fournit à des modules respectifs 14. Ces modules 14 effectuent les opérations de décodage canal et extraient les bits des différentes classes appartenant aux trames de parole successives. Pour cela, chaque module 14 reçoit les horloges $CK_r$ et $CK_v$, ainsi que l'index i des trames de transport, fourni par un compteur modulo M 15 cadencé par l'horloge $CK_r$. Pour chaque trame de parole, les modules d'extraction 14 fournissent les bits des différentes classes, qu'un multiplexeur 13 (optionnel) assemble pour former les trames de parole codée adressées au vocodeur 11.

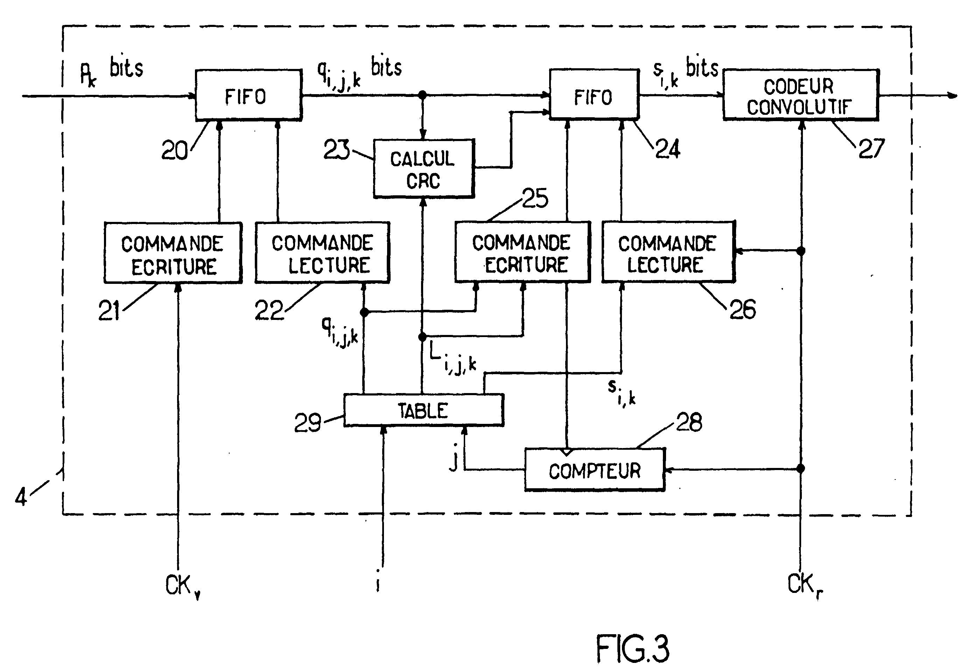

La figure 3 illustre une organisation possible du module de distribution 4 pour une classe de protection k (1 $\leq k \leq K$), pour laquelle on utilise d'une part un code de détection d'erreurs, ou CRC (« Cyclic Redundancy Checksum »), et d'autre part un codage correcteur d'erreurs, basé sur un code convolutif dans l'exemple représenté.

On considère que chaque trame de parole codée comporte un ensemble de $p_k$ bits au titre de la classe k (avec

$$\sum_{k=1}^{K} p_k = n_v$$

). Ces $p_k$ bits sont écrits dans une mémoire 20 de type premier entré - premier sorti (FIFO) recevant une commande d'écriture correspondante de la part d'une unité 21 commandée par l'horloge $CK_v$.

Chaque ensemble de $p_k$ bits est subdivisé en un ou plusieurs sous-ensembles de $q_{i,j,k}$ bits lus successivement dans la mémoire FIFO 20 sous la commande d'une unité 22. L'index i est celui délivré par le compteur 5 et fait référence aux trames de transport, tandis que l'index j fait référence aux trames de signal codé successives desquelles sont issus des bits relevant de la classe k et insérés dans la trame de transport i. Si $r_{i,k}$ désigne le nombre de bits de la classe k placés dans la trame de transport i, sans compter les bits de redondance (soit $r_{i,k} = p_k.N/M$ lorsque $p_k$ est divisible par M), alors l'index j varie de O à $J_{i,k}$, les nombres entiers $J_{i,k}$ étant tels que

$$\sum_{i'=0}^{i} J_{i',k}$$

soit l'entier immédiatement inférieur à $(i+1).r_{i,k}/p_k$, et

$$\sum_{j=0}^{J_{i,k}} q_{i,j,k} = r_{i,k}.$$

Chaque sous-ensemble de $q_{i,j,k}$ bits fait l'objet d'un calcul de CRC par une unité 23 fournissant un code de détection d'erreurs de $L_{i,j,k}$ bits. L'unité 23 peut consister classiquement en un registre à décalage recevant séquentiellement les bits lus dans la mémoire 20, associé à des opérateurs agencés conformément au polynôme générateur du code employé pour délivrer séquentiellement les bits du CRC après avoir reçu le sous-ensemble de $q_{i,j,k}$ bits. Lorsque le nombre $L_{i,j,k}$ de bits du CRC est variable (en fonction des index i et j), l'unité de calcul 23 comporte en outre des commutateurs commandés par un signal indiquant le nombre $L_{i,j,k}$ de bits du code et permettant de sélectionner les opérateurs actifs.

Les $q_{i,j,k}$ bits lus dans la mémoire FIFO 20, suivis par les $L_{i,j,k}$ bits du CRC calculés par l'unité 23, sont écrits dans une autre mémoire 24 de type FIFO recevant une commande d'écriture correspondante de la part d'une unité 25. La lecture dans la mémoire FIFO 24 est commandée par une unité 26 au rythme de l'horloge $CK_r$. Le bloc de

$$s_{i,k} = r_{i,k} + \sum_{j=0}^{J_{i,k}} L_{i,j,k}$$

bits extrait de la mémoire FIFO 24 à chaque lecture correspond aux $J_{i,k}$ sous-ensembles de bits et aux CRC qui leur sont respectivement associés. Ce bloc est adressé au circuit de codage 27 du module de distribution 4.

Le circuit 27 a une structure classique (registre à décalage et opérateurs associés). Le rendement ρ du codage convolutif est choisi en fonction du nombre $s_{i,k}$ de bits du bloc et du nombre de bits disponibles pour la classe k dans la i-ième trame radio de $n_r$ bits. Pour ajuster ce rendement, le circuit 27 peut utiliser une méthode classique de poinçonnement de codes convolutifs, en tenant compte éventuellement d'une courte séquence de bits connue adjointe au bloc de $s_{i,k}$ bits à coder et servant à initialiser le treillis employé par le décodeur. A chaque cycle de l'horloge $CK_r$, le circuit 27 adresse au multiplexeur 6 les bits des trames de transport relevant de la classe k.

Dans la réalisation représentée sur la figure 3, l'index j est fourni par un compteur 28 remis à 0 au début de chaque cycle de l'horloge $CK_r$ et incrémenté par un signal délivré par l'unité 25 lorsque l'écriture d'un sous-ensemble de $q_{i,j,k}$ bits et des $L_{i,j,k}$ bits de CRC correspondants a été effectuée dans la mémoire FIFO 24. Les index i, j délivrés par les compteurs 5, 28 servent à l'adressage dans une table 29 mémorisée dans le module de distribution 4. Cette table 29 contient les nombres entiers prédéfinis $q_{i,j,k}$ et $L_{i,j,k}$, fournis aux unités 22, 23, 25 pour régler les transferts entre les mémoires FIFO 20, 24 et les calculs de CRC. Elle contient également les nombres entiers $s_{i,k}$ fournis à l'unité 26 pour régler des transferts de la mémoire FIFO 24 vers le codeur 27.

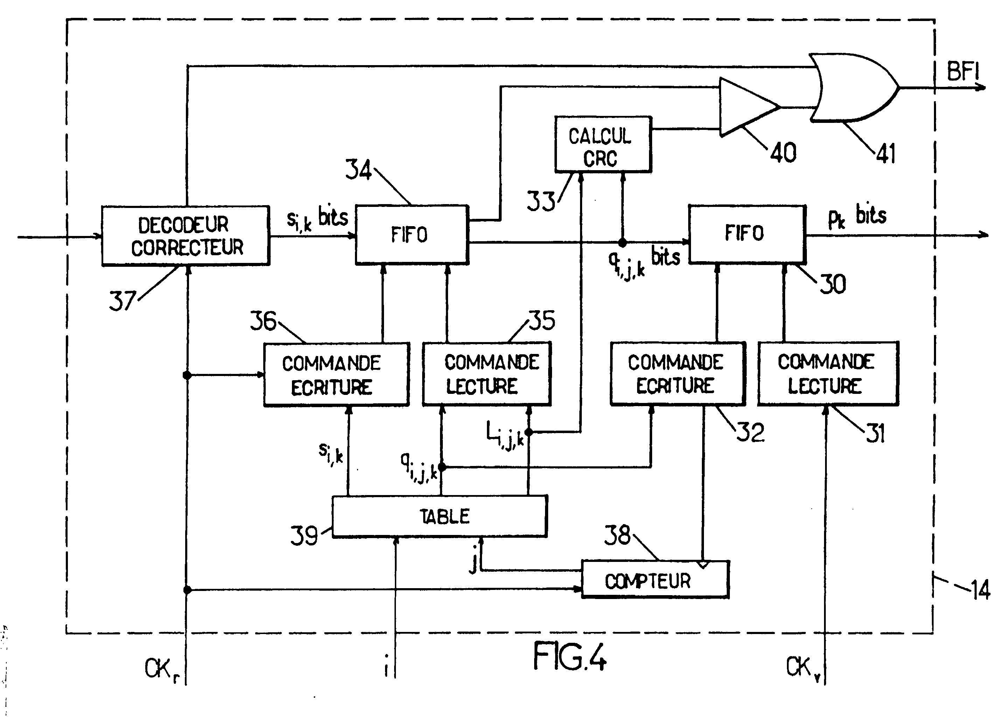

La figure 4 illustre une organisation possible du module d'extraction 14 correspondant au module de distribution 4 de la figure 3.

Les bits relevant de la classe k sont reçus du démultiplexeur 16 par le décodeur 37, qui exploite la redondance introduite dans chaque trame de transport par le codeur 27 pour corriger d'éventuelles erreurs de transmission. Le décodeur 37 a une structure classique, et fonctionne par exemple selon l'algorithme de Viterbi. Pour chaque trame de transport, il délivre un bloc de $s_{i,k}$ bits décodés écrits dans une mémoire 34 de type FIFO sous la commande d'une unité 36 cadencée par l'horloge $CK_r$. Une unité 35 commande successivement les lectures de groupes de $q_{i,j,k}+L_{i,j,k}$ bits dans la mémoire FIFO 34. Les $q_{i,j,k}$ bits du « sous-ensemble » sont transférés à une autre mémoire FIFO 30, et d'autre part adressés à une unité 33 de calcul de CRC fonctionnant de la même manière que l'unité 23 de la figure 3.

L'unité 33 recalcule le CRC de $L_{i,j,k}$ bits associé aux $q_{i,j,k}$ bits du sous-ensemble. Un comparateur 40 reçoit ce code recalculé ainsi que les $L_{i,j,k}$ bits de CRC lus dans la mémoire FIFO 34 après les $q_{i,j,k}$ bits du sous-ensemble. Le comparateur 40 délivre un bit à 0 si les deux CRC coïncident, et à 1 sinon. Ce bit est adressé à une entrée d'une porte OU 41 dont l'autre entrée reçoit un autre bit d'erreur issu du décodeur correcteur 37. Ce bit d'erreur est placé à 1 au cours du cycle de l'horloge $CK_r$ lorsque le décodeur 37 a estimé que la trame reçue était de trop mauvaise qualité pour que le décodage soit fiable. La porte OU 41 délivre ainsi un bit BFI indiquant pour chaque sous-ensemble de $q_{i,j,k}$ bits si une erreur de transmission a été détectée ou non. Ces bits BFI sont fournis au vocodeur 11 du récepteur, qui peut alors prendre des mesures appropriées pour tenir compte de l'erreur détectée, par exemple une interpolation de paramètres.

Il est à noter que les bits de détection BFI sont différenciés en fonction des trames de signal de parole codé. On évite ainsi qu'une erreur ponctuelle survenant dans un sous-ensemble de $q_{i,j,k}$ bits, détectée grâce au CRC, conduise à considérer comme erronés des bits d'un autre sous-ensemble de $q_{i,j',k}$ bits placé dans la même trame de transport i mais appartenant à une autre trame de parole (j' ≠ j).

Les écritures dans la mémoire FIFO 30 du module d'extraction 14 sont commandés par une unité 32, par sous-ensembles de $q_{i,j,k}$ bits, et les lectures sont commandées par une unité 31 au rythme de l'horloge $CK_v$, par ensembles de $p_k$ bits successivement fournis au multiplexeur 13.

De façon semblable au module de distribution 4 précédemment décrit, le module d'extraction 14 comporte un compteur 38 remis à zéro au début de chaque cycle de l'horloge $CK_r$ et incrémenté par un signal issu de l'unité 32 lorsque l'écriture d'un sous-ensemble $q_{i,j,k}$ bits a été effectuée dans la mémoire FIFO 30. Ce compteur 38 délivre l'index j des trames de parole. Les index i, j produits par les compteurs 15, 38 servent à l'adressage dans une table 39 mémorisée dans le module 14. Comme précédemment, cette table 39 contient les nombres entiers $q_{i,j,k}$ et $L_{i,j,k}$ fournis aux modules 32, 33, 35 pour régler les transferts entre les mémoires FIFO 34, 30 et les calculs de CRC, ainsi que les nombres entiers $s_{i,k}$ fournis à l'unité 36 pour régler les transferts entre le décodeur 37 et la mémoire FIFO 34.

Si une classe k ne fait l'objet d'aucun codage correcteur d'erreurs, les modules 4 et 14 peuvent avoir la même structure que sur les figures 3 et 4 sans les circuits 27 et 37, les blocs de $s_{i,k}$ bits étant directement adressés de la mémoire 24 au multiplexeur 6 et du démultiplexeur 16 à la mémoire 34.

Si une classe k ne fait l'objet d'aucun calcul de CRC, on peut se dispenser de l'unité de calcul de CRC, de l'une des deux mémoires FIFO et de ses unités de commande d'écriture et de lecture dans chacun des modules 4, 14. La table 29, 39 peut ne contenir que les nombres $s_{i,k}$, la subdivision en sous-ensembles de $q_{i,j,k}$ bits étant implicite du fait des écritures et lectures successives dans la mémoire FIFO.

On notera que les structures représentées sur les figures ne sont que des exemples parmi d'autres entrant dans le cadre de l'invention. Ainsi, chaque module 4, 14 pourrait ne comporter qu'une seule mémoire tampon. D'autre part, dans une application donnée, les nombres $q_{i,j,k}$, $L_{i,j,k}$ et $s_{i,k}$ sont figés, de sorte qu'on peut généralement se dispenser des compteurs 28, 38 et des tables 29, 39,

A titre d'exemple, le procédé selon l'invention peut être mis en oeuvre avec les valeurs numériques suivantes, correspondant à l'application décrite dans la demande de brevet FR-99 06345. Les trames de parole et de transport ont la même durée d de 20 ms. La parole codée sur une plage de durée T = 180 ms (N = 9) donne lieu à l'émission de M = 8 trames radio de $n_r$ = 140 bits. La trame de signal de parole codée se compose de $n_v$ = 80 bits répartis en K = 2 classes de sensibilité. Les ensembles de bits correspondant à chaque classe ont la même taille, soit $p_1 = p_2 = 40$, de sorte que $r_{i,k}$ = 45 pour toutes les trames et toutes les classes. Aucun mécanisme de détection ou de correction d'erreurs n'est appliqué à la classe 2 la moins sensible ($s_{i,2} = r_{i,2} = 45$). Pour l'autre classe, on a choisi $s_{i,1}$ = 51. Les nombres de bits des sous-ensembles et des CRC sont indiqués dans le Tableau I. Le rendement $\rho$ du code convolutif, appliqué par le circuit 27 dans le module de distribution 4 relatif à la classe 1, est tel que $s_{i,1}/\rho + s_{i,2} \leq n_r$, soit 51/$\rho$ + 45 ≤ 140. Dans cette application, le rendement $\rho$ est donc de l'ordre de 0,54, ce qui peut être réalisé en poinçonnant un code convolutif de rendement 1/2.

TABLEAU I

| i | $J_{i,1} = J_{i,2}$ | $q_{i,0,1}=q_{i,0,2}$ | $q_{i,1,1}=q_{i,1,2}$ | $L_{i,0,1}$ | $L_{i,1,1}$ | $L_{i,0,2}=L_{i,1,2}$ |
|---|---|---|---|---|---|---|
| 0 | 1 | 40 | 5 | 4 | 2 | 0 |
| 1 | 1 | 35 | 10 | 4 | 2 | 0 |
| 2 | 1 | 30 | 15 | 4 | 2 | 0 |
| 3 | 1 | 25 | 20 | 3 | 3 | 0 |
| 4 | 1 | 20 | 25 | 3 | 3 | 0 |
| 5 | 1 | 15 | 30 | 2 | 4 | 0 |
| 6 | 1 | 10 | 35 | 2 | 4 | 0 |
| 7 | 1 | 5 | 40 | 2 | 4 | 0 |

**Revendications**

1. Procédé de formation de trames de transport, à transmettre sur un canal de communication, à partir de trames de signal codé, dans lequel chaque trame de signal codé comporte au moins un ensemble de bits à protéger contre des erreurs de transmission, incluant au moins un sous-ensemble de bits pour lequel on calcule un code de détection d'erreurs respectif, et dans lequel chacun desdits sous-ensembles de bits est placé dans une trame de transport avec son code de détection d'erreurs respectif, **caractérisé en ce que** certaines au moins des trames de transport contiennent plusieurs sous-ensembles de bits, issus de trames de signal codé différentes et accompagnés par leurs codes de détection d'erreurs respectifs.

2. Procédé selon la revendication 1, dans lequel le nombre ($q_{i,j,k}$) de bits desdits sous-ensembles varie d'une trame de signal codé à une autre, et le nombre ($L_{i,j,k}$) de bits du code de détection d'erreurs calculé pour un sous-ensemble de bits est une fonction croissante du nombre de bits dudit sous-ensemble.

3. Procédé selon la revendication 1 ou 2, dans lequel, dans chaque trame de transport, le nombre total de bits provenant desdits ensembles de bits à protéger est constant, de même que le nombre total de bits desdits codes de détection d'erreurs.

4. Dispositif de formation de trames de transport, à transmettre sur un canal de communication, à partir de trames de signal codé, dans lequel chaque trame de signal codé comporte au moins un ensemble de bits à protéger contre des erreurs de transmission, incluant au moins un sous-ensemble de bits, le dispositif comprenant des moyens (23) de calcul d'un code de détection d'erreurs respectif pour chacun desdits sous-ensembles de bits, et des moyens de multiplexage (6, 20-22, 24-26) pour placer chacun desdits sous-ensembles de bits dans une trame de transport avec son code de détection d'erreurs respectif, **caractérisé en ce que** les moyens de multiplexage sont agencés pour placer plusieurs sous-ensembles de bits, issus de trames de signal codé différentes et accompagnés par leurs codes de détection d'erreurs respectifs, dans certaines au moins des trames de transport.

**5.** Dispositif selon la revendication 4, dans lequel le nombre ($q_{i,j,k}$) de bits desdits sous-ensembles varie d'une trame de signal codé à une autre, et le nombre ($L_{i,j,k}$) de bits du code de détection d'erreurs calculé pour un sous-ensemble de bits est une fonction croissante du nombre de bits dudit sous-ensemble.

**6.** Dispositif selon la revendication 4 ou 5, dans lequel, dans chaque trame de transport, le nombre total de bits provenant desdits ensembles de bits à protéger est constant, de même que le nombre total de bits desdits codes de détection d'erreurs.

**7.** Dispositif selon la revendication 6, comprenant en outre des moyens (27) de codage pour appliquer, dans chaque trame de transport, un code correcteur d'erreurs à un bloc formé par les sous-ensembles de bits provenant desdits ensembles de bits à protéger et par leurs codes de détection d'erreurs respectifs.

**8.** Dispositif selon l'une quelconque des revendications 4 à 7, dans lequel les trames de transport et les trames de signal codé sont de même durée, et le contenu de N trames de signal codé consécutives est inséré dans M trames de transport consécutives, N et M étant des nombres tels que N > M.

**9.** Dispositif d'extraction de trames de signal codé à partir de trames de transport reçues sur un canal de communication, dans lequel chaque trame de signal codé comporte au moins un ensemble de bits protégés contre des erreurs de transmission, incluant au moins un sous-ensemble de bits, le dispositif comprenant des moyens de démultiplexage (16, 30-32, 34-36) pour extraire de chaque trame de transport au moins un desdits sous-ensembles de bits, accompagné par un code de détection d'erreurs respectif, **caractérisé en ce que** les moyens de démultiplexage sont agencés pour extraire plusieurs sous-ensembles de bits de certaines au moins des trames de transport, et pour distribuer ces sous-ensembles de bits, associés à leurs codes de détection d'erreurs respectifs, dans des trames de signal codé différentes.

**10.** Dispositif selon la revendication 9, dans lequel le nombre ($q_{i,j,k}$) de bits desdits sous-ensembles varie d'une trame de signal codé à une autre, et le nombre ($L_{i,j,k}$) de bits du code de détection d'erreurs relatif à un sous-ensemble de bits est une fonction croissante du nombre de bits dudit sous-ensemble.

**11.** Dispositif selon la revendication 9 ou 10, dans lequel, dans chaque trame de transport, le nombre total de bits relevant desdits ensembles de bits protégés est constant, de même que le nombre total de bits desdits codes de détection d'erreurs.

**12.** Dispositif selon la revendication 11, comprenant en outre des moyens de décodage (37) pour corriger des éventuelles erreurs de transmission dans un bloc formé, dans chaque trame de transport, par les bits relevant desdits ensembles de bits protégés et par lesdits codes de détection d'erreurs.

**13.** Dispositif selon l'une quelconque des revendications 9 à 12, dans lequel les trames de transport et les trames de signal codé sont de même durée, et le contenu de N trames de signal codé consécutives est extrait de M trames de transport consécutives, N et M étant des nombres tels que N > M.


**Patentansprüche**

**1.** Verfahren zur Bildung von über einen Kommunikationskanal zu sendenden Transportrahmen aus Rahmen für ein kodiertes Signal, in dem jeder Rahmen für ein kodiertes Signal wenigstens eine Menge von gegen Übertragungsfehler zu schützenden Bits umfasst, die wenigstens eine Untermenge von Bits enthält, für die ein jeweiliger Fehlererfassungscode berechnet wird, und in dem jede der Untermengen von Bits mit ihrem jeweiligen Fehlererfassungscode in einen Transportrahmen platziert wird, **dadurch gekennzeichnet, dass** wenigstens bestimmte der Transportrahmen mehrere Untermengen von Bits enthalten, die aus unterschiedlichen Rahmen für ein codiertes Signal stammen und mit ihren jeweiligen Fehlererfassungscodes gekoppelt sind.

**2.** Verfahren nach Anspruch 1, in dem die Anzahl ($q_{i,j,k}$) von Bits der Untermengen von einem Rahmen für ein codiertes Signal zu einem weiteren Rahmen verschieden ist, und in dem die Anzahl ($L_{i,j,k}$) von Bits des für eine Untermenge von Bits berechneten Fehlererfassungscodes eine steigende Funktion der Anzahl von Bits der Untermenge ist.

**3.** Verfahren nach Anspruch 1 oder 2, in dem in jedem Transportrahmen die Gesamtzahl der von den zu schützenden Mengen von Bits stammenden Bits, ebenso wie die Gesamtzahl von Bits der Fehlererfassungscodes konstant ist.

**4.** Vorrichtung zur Bildung von über einen Kommunikationskanal zu sendenden Transportrahmen aus Rahmen für ein kodiertes Signal, in dem jeder Rahmen für ein kodiertes Signal wenigstens eine Menge von gegen Übertragungsfehler zu schützende Bits umfasst, die wenigstens eine Untermenge von Bits enthält, wobei die Vorrichtung Mittel (23) zur Berechnung eines jeweiligen Fehlererfassungscodes für jede der Untermengen von Bits und Multiplexingmittel (6, 20-22, 24-26), um jede der Untermengen von Bits mit ihrem jeweiligen Code zur Erfassung von Fehlern in einen Transportrahmen zu platzieren, umfasst, **dadurch gekennzeichnet, dass** die Multiplexingmittel ausgelegt sind, um mehrere Untermengen von Bits zu platzieren, die aus unterschiedlichen Rahmen für ein codiertes Signal stammen und mit ihren jeweiligen Fehlererfassungscodes gekoppelt sind.

**5.** Vorrichtung nach Anspruch 4, in der die Anzahl ($q_{i,j,k}$) von Bits der Untermengen von einem Rahmen für ein codiertes Signal zu einem weiteren Rahmen verschieden ist, und in dem die Anzahl ($L_{i,j,k}$) von Bits des für eine Untermenge von Bits berechneten Fehlererfassungscodes eine steigende Funktion der Anzahl von Bits der Untermenge ist.

**6.** Vorrichtung nach Anspruch 4 oder 5, in der in jedem Transportrahmen die Gesamtzahl der von den zu schützenden Mengen von Bits stammenden Bits, ebenso wie die Gesamtzahl von Bits der Fehlererfassungscodes konstant ist.

**7.** Vorrichtung nach Anspruch 6, die ferner Codierungsmittel (27) umfasst, um in jedem Transportrahmen auf einen aus den Untermengen von Bits, die aus den zu schützenden Mengen von Bits stammen, und aus ihren jeweiligen Fehlererfassungscodes gebildeten Block einen Fehlerkorrekturcode anzuwenden.

**8.** Vorrichtung nach einem der Ansprüche 4 bis 7, in der die Transportrahmen und die Rahmen für ein codiertes Signal die gleiche Zeitdauer haben und in der der Inhalt von N aufeinanderfolgende Rahmen für ein codiertes Signal in M aufeinanderfolgende Transportrahmen eingefügt wird, wobei N und M Zahlen sind, für die gilt N > M.

**9.** Vorrichtung zur Rückgewinnung von Rahmen für ein codiertes Signal aus über einen Kommunikationskanal empfangenen Transportrahmen, in der jeder Rahmen für ein codiertes Signal wenigstens eine Menge von gegen Übertragungsfehler geschützte Bits umfasst, die wenigstens einer Untermenge von Bits enthält, wobei die Vorrichtung Demultiplexingmittel (16, 30-32, 34-36) umfasst, um von jedem Transportrahmen wenigstens eine der Untermengen von Bits zurückzugewinnen, die mit einem jeweiligen Fehlererfassungscode gekoppelt ist, **dadurch gekennzeichnet, dass** die Demulitplexingmittel ausgelegt sind, um von wenigstens bestimmten Transportrahmen mehrere Untermengen von Bits zurückzugewinnen und diese Untermengen von Bits, die mit ihren jeweiligen Fehlererfassungscodes verknüpft sind, in unterschiedliche Rahmen für ein codiertes Signal zu verteilen.

**10.** Vorrichtung nach Anspruch 9, in dem die Anzahl ($q_{i,j,k}$) von Bits der Untermengen von einem Rahmen für ein codiertes Signal zu einem weiteren Rahmen verschieden ist, und wobei die Anzahl ($L_{i,j,k}$) von Bits des einer Untermenge von Bits zugeordneten Fehlererfassungscodes eine steigende Funktion der Anzahl von Bits der Untermenge ist.

**11.** Vorrichtung nach Anspruch 9 oder 10, in der in jedem Transportrahmen die Gesamtzahl von Bits aus der Menge von gesicherten Bits, ebenso wie die Gesamtzahl von Bits der Fehlererfassungscodes konstant ist.

**12.** Vorrichtung nach Anspruch 11, die ferner Decodierungsmittel (37) umfasst, um etwaige Übertragungsfehler in einem Block zu korrigieren, der in jedem Transportrahmen aus den Bits aus den Mengen von geschützten Bits und aus den Fehlererfassungscodes gebildet ist.

**13.** Vorrichtung nach einem der Ansprüche 9 bis 12, in dem die Transportrahmen und die Rahmen für ein codiertes Signal von gleicher Zeitdauer sind und in denen der Inhalt von N aufeinanderfolgenden Rahmen für ein codiertes Signal aus M aufeinanderfolgenden Transportrahmen zurückgewonnen wird, wobei N und M Zahlen sind, für die gilt N > M.

**Claims**

**1.** Method for forming transport frames, to be transmitted on a communication channel, from coded-signal frames, wherein each coded-signal frame comprises at least one set of bits to be protected against transmission errors, including at least one subset of bits for which a respective error detection code is calculated, and wherein each of said subsets of bits is placed in a transport frame with its respective error detection code, **characterized in that** some at least of the transport frames contain several subsets of bits, emanating from different coded-signal frames and accompanied by their respective error detection codes.

2. The method as claimed in claim 1, wherein the number ($q_{i,j,k}$) of bits of said subsets varies from one coded-signal frame to another, and the number ($L_{i,j,k}$) of bits of the error detection code calculated for a subset of bits is an increasing function of the number of bits of said subset.

3. The method as claimed in claim 1 or 2, wherein, in each transport frame, the total number of bits from said sets of bits to be protected is constant, as well as the total number of bits of said error detection codes.

4. Device for forming transport frames, to be transmitted on a communication channel, from coded-signal frames, wherein each coded-signal frame comprises at least one set of bits to be protected against transmission errors, including at least one subset of bits, the device comprising means (23) for calculating a respective error detection code for each of said subsets of bits, and multiplexing means (6, 20-22, 24-26) for placing each of said subsets of bits in a transport frame with its respective error detection code, **characterized in that** the multiplexing means are arranged to place several subsets of bits, emanating from different coded-signal frames and accompanied by their respective error detection codes, in some at least of the transport frames.

5. The device as claimed in claim 4, wherein the number ($q_{i,j,k}$) of bits of said subsets varies from one coded-signal frame to another, and the number ($L_{i,j,k}$) of bits of the error detection code calculated for a subset of bits is an increasing function of the number of bits of said subset.

6. The device as claimed in claim 4 or 5, wherein, in each transport frame, the total number of bits originating from said sets of bits to be protected is constant, as well as the total number of bits of said error detection codes.

7. The device as claimed in claim 6, further comprising coding means (27) for applying, in each transport frame, an error correcting code to a block formed by the subsets of bits originating from said sets of bits to be protected and by their respective error detection codes.

8. The device as claimed in any one of claims 4 to 7, wherein the transport frames and the coded-signal frames are of the same duration, and the content of N consecutive coded-signal frames is inserted into M consecutive transport frames, N and M being numbers such that N > M.

9. A device for extracting coded-signal frames from transport frames received on a communication channel, wherein each coded-signal frame comprises at least one set of bits protected against transmission errors, including at least one subset of bits, the device comprising demultiplexing means (16, 30-32, 34-36) for extracting from each transport frame at least one of said subsets of bits, along with a respective error detection code, **characterized in that** the demultiplexing means are arranged to extract several subsets of bits from some at least of the transport frames, and to distribute these subsets of bits, associated with their respective error detection codes, in different coded-signal frames.

10. The device as claimed in claim 9, wherein the number ($q_{i,j,k}$) of bits of said subsets varies from one coded-signal frame to another, and the number ($L_{i,j,k}$) of bits of the error detection code calculated for a subset of bits is an increasing function of the number of bits of said subset.

11. The device as claimed in claim 9 or 10, wherein, in each transport frame, the total number of bits originating from said sets of bits to be protected is constant, as well as the total number of bits of said error detection codes.

12. The device as claimed in claim 11, further comprising decoding means (37) for correcting any transmission errors in a block formed, in each transport frame, by the bits pertaining to said sets of protected bits and by said error detection codes.

13. The device as claimed in any one of claims 9 to 12, wherein the transport frames and the coded-signal frames are of the same duration, and the content of N consecutive coded-signal frames is extracted from M consecutive transport frames, N and M being numbers such that N > M.

FIG.1

FIG.2

FIG.3

EP 1 197 021 B1

FIG.4